# FASCICULE DE BREVET EUROPEEN

(11) **EP 2 907 721 B1**
(45) Date de publication et mention de la délivrance du brevet: **10.06.2020**
(21) Numéro de dépôt: 15154720.5
(22) Date de dépôt: 11.02.2015
(51) Int. Cl.: B61D 19/02

(54) **Dispositif de commande de l'ouverture d'au moins une porte d'un véhicule ferroviaire, véhicule comportant un tel dispositif et procédé de commande associé**
Steuervorrichtung zur Öffnung mindestens einer Tür eines Schienenfahrzeugs, Fahrzeug, das eine solche Vorrichtung umfasst, und entsprechendes Steuerverfahren
Device for controlling the opening of at least one door of a railway vehicle, vehicle comprising such a device and related control method

(30) Priorité: 11.02.2014 FR 1400381
(43) Date de publication de la demande: 19.08.2015
(73) Titulaire: ALSTOM Transport Technologies, 93400 Saint-Ouen (FR)
(72) Inventeur: Classen, Annegret, 59195 Herin (FR); Setan, Frédéric, 59269 Sepmeries (FR); Bailly, Sébastien, 67110 Oberbronn (FR); Sauvage, Patrick, 83470 Saint Maximin La Sainte Beaume (FR); Pressouyre, Guillaume, 13090 Aix en Provence (FR)
(74) Mandataire: Lavoix

(56) Documents cités:
- EP-A1- 1 382 506
- EP-A1- 1 418 443
- EP-A1- 2 423 708
- WO-A1-98/58148
- FR-A1- 2 942 195

## Description

La présente invention concerne un dispositif de commande de l'ouverture d'au moins une porte d'un véhicule ferroviaire, comportant des moyens de commande de l'ouverture des portes.

Le document EP 2 423 708 A1 décrit un système permettant de détecter la présence ou l'absence d'un quai face à un train. Le système comporte des moyens de projection d'un faisceau laser sur la zone dans laquelle on recherche le quai ainsi qu'une caméra permettant d'enregistrer l'image du faisceau laser.

On connaît déjà dans l'état de la technique, notamment d'après WO 98/58148, le recours à un dispositif de commande de l'ouverture d'une porte d'un véhicule ferroviaire, dans lequel des moyens de commande autorisent l'ouverture de la porte en cas de détection du quai par des moyens de détection.

Les moyens de détection comprennent généralement un capteur sans contact disposé à proximité de la porte considérée, par exemple un émetteur-récepteur acoustique ou optique. Ces moyens de détection sont généralement adaptés pour émettre des impulsions dans un volume situé au-dessus du plan de roulement.

Par « plan de roulement », on entend au sens de la présente invention le plan défini par la partie supérieure des rails d'une voie ferrée.

Les éventuels obstacles, par exemple un quai, présents dans ce volume renvoient un écho correspondant à chaque impulsion émise.

Les moyens de détection sont également adaptés pour mesurer la durée entre l'émission d'une l'impulsion et la réception de son écho renvoyé par l'obstacle. Cette durée permet notamment de déterminer la distance entre l'obstacle et l'émetteur-récepteur. Si cette distance se trouve dans un intervalle prédéterminé, alors l'obstacle est assimilé à un quai.

En outre, si aucun écho n'est reçu, le dispositif de commande considère qu'il n'y a pas de quai en face de la porte, et empêche son ouverture.

Néanmoins, un tel dispositif de commande ne donne pas entière satisfaction.

En effet, certains objets, distincts des quais, sont parfois disposés au-dessus du plan de roulement et sont susceptibles d'être assimilés à un quai par le dispositif de l'état de la technique. De tels objets sont par exemple des poteaux, des coffrets techniques, des moteurs d'aiguilles, ou encore des balises de détection.

Un but de l'invention est donc de proposer un dispositif de commande de l'ouverture d'une porte qui discrimine un quai avec une meilleure fiabilité.

A cet effet, l'invention a pour objet un dispositif selon la revendication 1.

En particulier, une détection par au moins deux de ces dispositifs de détection permet de s'assurer que l'objet est un quai et non un objet tel qu'un poteau ou un coffret technique, et ainsi de n'autoriser l'ouverture de ladite porte que lorsque l'objet est bien un quai.

Suivant d'autres aspects avantageux de l'invention, le dispositif comporte une ou plusieurs des caractéristiques selon l'une quelconque des revendications 2 à 8, prises isolément ou suivant toutes combinaisons techniquement possibles.

L'invention a également pour objet un véhicule ferroviaire selon la revendication 9.

En outre, l'invention a pour objet un procédé de commande de l'ouverture d'au moins une porte d'un véhicule ferroviaire au moyen d'un dispositif de commande tel que défini précédemment selon la revendication 10.

Suivant un autre aspect avantageux de l'invention, le procédé comporte les caractéristiques de la revendication 11.

L'invention sera mieux comprise à la lecture de la description qui va suivre, donnée uniquement à titre d'exemple non limitatif et faite en se référant aux dessins annexés sur lesquels :
- la figure 1 est un détail d'une vue de côté d'un véhicule ferroviaire comprenant un dispositif de commande selon l'invention ;
- la figure 2 est une représentation schématique du dispositif de commande de la figure 1 ;
- la figure 3 est un détail de la représentation de la figure 2 ;
- la figure 4 est un organigramme du fonctionnement du dispositif de la figure 1 ;
- la figure 5 est un détail d'une vue en section selon le plan V-V lorsqu'un quai se trouve devant l'une des portes du véhicule ;
- la figure 6 est un détail d'une vue de côté du véhicule de la figure 1 lorsque la partie basse d'un quai en bateau se trouve devant l'une de ses portes ; et
- la figure 7 est un détail d'une vue en section selon le plan V-V lorsqu'un objet distinct d'un quai se trouve devant l'une des portes du véhicule.

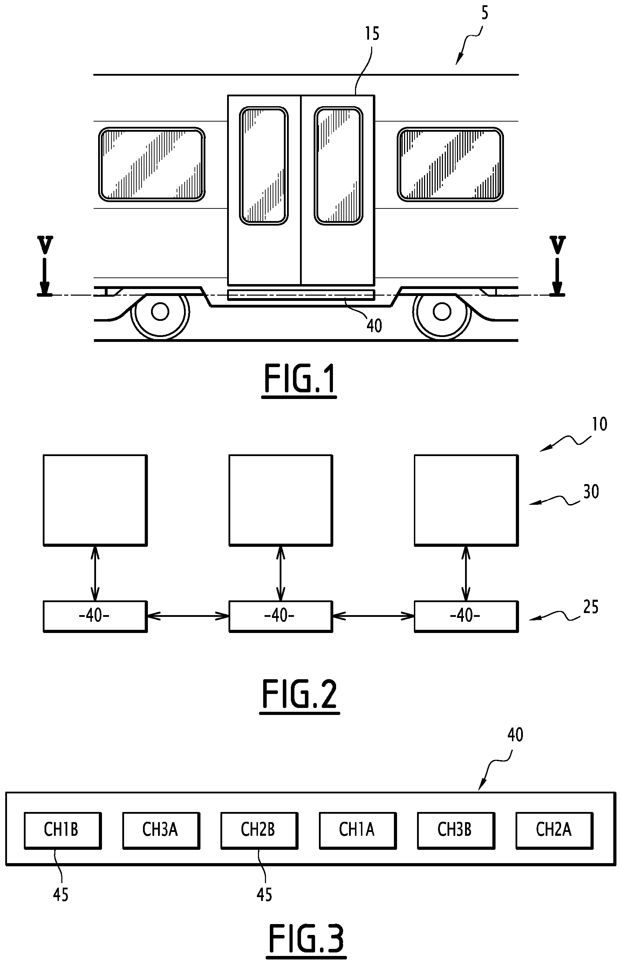

On a représenté sur la figure 1 un véhicule ferroviaire 5, comportant un dispositif 10, représenté schématiquement sur la figure 2, de commande de l'ouverture de portes 15 du véhicule 5.

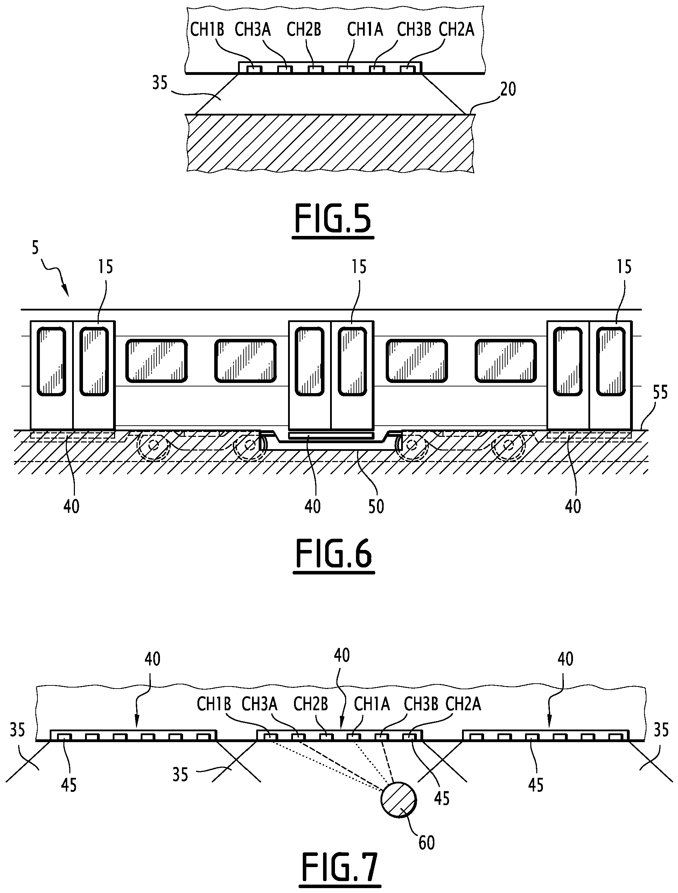

Le dispositif de commande 10 est destiné à autoriser l'ouverture d'au moins une porte 15 en cas de détection d'un quai 20, représenté sur la figure 5, en regard de la porte 15.

Comme cela est représenté sur la figure 2, le dispositif de commande 10 comporte des moyens 25 de détection de la présence d'un quai 20 et des moyens 30 de commande de l'ouverture des portes 15.

Les moyens de détection 25 comportent au moins une unité de détection 40, chaque unité de détection 40 comportant un ou plusieurs dispositifs de détection, chaque unité de détection 40 étant associée à une porte 15 distincte, et disposée par exemple sous celle-ci. Chaque unité de détection 40 est destinée à détecter la présence d'un quai 20 dans une zone de détection 35 définie devant cette porte 15, ladite zone de détection étant représentée sur les figures 5 et 7.

Chaque unité de détection 40 est également propre à émettre un signal de détection de quai 20 correspondant à une porte 15 en cas détection de la présence d'un quai 20 dans la zone de détection 35 associée à ladite porte 15. Un tel signal de détection de quai est notamment émis en direction des moyens de commande 30.

Les moyens de commande 30 sont propres à empêcher ou autoriser l'ouverture de chacune des portes 15. En particulier, les moyens de commande 30 sont propres à autoriser l'ouverture d'une porte 15 en cas de réception d'un signal de détection de quai 20 en regard de cette porte 15, le signal étant émis par l'unité de détection 40 correspondante.

De manière plus précise, chaque unité de détection 40 comprend des moyens de traitement propres à générer ledit signal de détection de quai.

Les moyens de traitement d'une unité de détection 40 d'une porte 15 sont par ailleurs configurés pour émettre un signal de détection de quai à destination des moyens de traitement de chacune des unités de détection 40 associées aux portes 15 adjacentes à ladite porte 15.

Ainsi, les moyens de commande 30 autorisent également l'ouverture de la porte 15 lorsque l'unité de détection 40 de cette porte 15 n'a pas détecté de quai, mais que les unités de détection 40 des portes 15 adjacentes ont chacune détecté un quai.

En d'autres termes le dispositif selon l'invention est adapté pour autoriser l'ouverture d'une porte dans le cas d'un quai en bateau, au contraire d'un dispositif de commande de l'état de la technique, qui empêchait l'ouverture d'une porte se situant en face de la partie basse du quai bateau, bien que cela ne présente aucun danger pour les passagers.

On rappelle qu'un quai est dit « en bateau », lorsqu'il présente une partie plus proche du plan de roulement que le reste du quai, généralement de quelques dizaines de centimètres, par exemple pour permettre la traversée des voies ferrées.

Conformément au mode de réalisation décrit, chaque unité de détection 40 comporte au moins deux dispositifs de détection, chaque dispositif de détection étant distinct des autres dispositifs de détection de l'unité de détection 40.

Chaque unité de détection 40 comporte par exemple trois dispositifs de détection CH1, CH2, CH3.

Chaque dispositif de détection CH1, CH2, CH3 comporte une pluralité de capteurs 45, par exemple deux capteurs 45 par dispositif de détection.

Chaque capteur 45 est propre à détecter la présence d'un objet dans la zone de détection 35 et à mesurer la distance à laquelle se trouve l'objet.

Avantageusement, les capteurs 45 sont propres à détecter la présence d'un objet uniquement s'il se trouve à une distance appartenant à un intervalle prédéterminé, de préférence une distance comprise entre 100 mm et 2000 mm, par exemple comprise entre 300 mm et 1000 mm.

Par exemple, au moins un capteur 45, de préférence chaque capteur 45, est un émetteur-récepteur à ultrasons, avantageusement un transducteur à ultrasons.

En variante, au moins un capteur 45, de préférence chaque capteur 45, est un émetteur-récepteur optique, de préférence un émetteur-récepteur à laser.

Avantageusement, les capteurs 45 de chaque unité de détection 40 sont deux à deux propres à émettre des ondes de fréquences différentes. Ainsi, on limite les risques pour un capteur 45 de confondre son onde émise avec l'onde émise par un autre capteur 45.

De manière optionnelle, une plaque bouclier à ondes est agencée en dessous des capteurs 45, sensiblement parallèlement au plan de roulement, de manière à ce que les ondes émises par les capteurs 45 ne soient pas dirigées vers le sol, et que le sol ne soit pas considéré comme un objet détecté.

Avantageusement, les capteurs 45 sont propres à émettre des ondes dans un cône d'angle d'ouverture supérieur à 30°. Chaque dispositif de détection a une orientation prédéfinie en fonction du type de quai à détecter, par exemple entre 5° et 30°. En variante, chaque capteur 45 de chaque dispositif de détection a une orientation particulière.

Les capteurs 45 de chaque unité de détection 40 sont disposés sous la porte 15 correspondante. Les capteurs 45 sont en outre disposés le long d'un axe X-X longitudinal du véhicule ferroviaire 5.

Dans l'exemple de réalisation représenté sur les figures 3, 5, 6 et 7, chaque unité de détection 40 comporte six capteurs 45.

Les capteurs 45 identifiés par les références CH1A, CH1B sont associés au premier dispositif de détection CH1. Les capteurs 45 identifiés par les références CH2A, CH2B sont associés au deuxième dispositif de détection CH2. Les capteurs 45 identifiés par les références CH3A, CH3B sont associés au troisième dispositif de détection CH3.

Chaque dispositif de détection CH1, CH2, CH3 comprend deux capteurs 45 non adjacents le long de l'axe longitudinal X-X.

Comme cela est illustré par la figure 3, les six capteurs 45 de l'unité de détection 40 sont identifiés successivement par les références CH1B, CH3A, CH2B, CH1A, CH3B, CH2A. Ainsi, dans cet exemple, pour chaque dispositif de détection CH1, CH2, CH3, au moins un capteur de chacune des autres dispositifs de détection est intercalé entre les deux capteurs dudit dispositif de détection.

En variante, toute autre permutation dans laquelle les capteurs 45 d'un même dispositif de détection CH1, CH2, CH3 ne sont pas adjacents est envisageable.

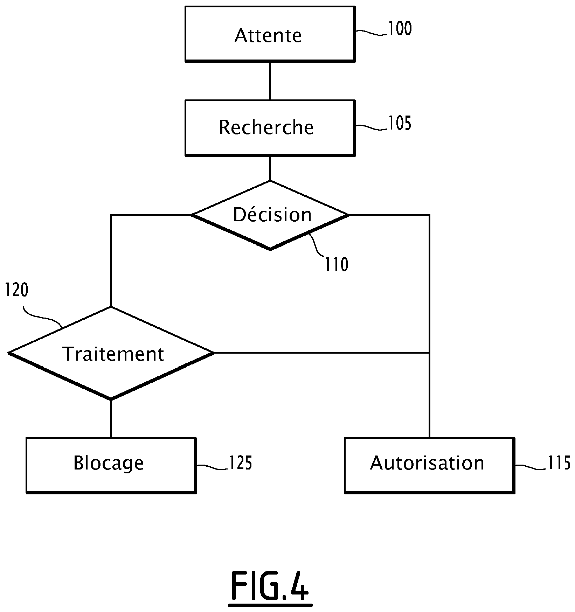

Le fonctionnement du dispositif de commande 10 va maintenant être décrit en référence aux figures 4 à 7.

La situation représentée sur la figure 5 correspond à l'arrêt du véhicule 5 devant un quai 20.

La situation représentée sur la figure 6 correspond à l'arrêt du véhicule 5 devant la partie basse 50 d'un quai en bateau 55.

La situation représentée sur la figure 7 correspond à l'arrêt du véhicule 5 devant un objet 60 distinct d'un quai 20.

Au cours d'une première étape 100 d'attente, le véhicule ferroviaire 5 est à l'arrêt et les moyens de commande 30 sont en attente de signaux de détection de quai en provenance des unités de détection 40.

Au cours d'une étape suivante 105 de recherche, les capteurs 45 émettent des ondes en direction de la zone de détection 35.

En cas de réception d'un écho par un capteur 45, le capteur 45 détermine la distance de l'objet qui a renvoyé l'écho.

De préférence, deux capteurs 45 correspondant à des dispositifs différents émettent des ondes à des instants différents.

Avantageusement, la durée entre l'émission successive d'ondes par les capteurs 45 de deux dispositifs différents est inférieure à 200 ms, par exemple inférieure ou égale à 100 ms.

De préférence, chaque capteur 45 rejette les échos dont l'amplitude est inférieure à un seuil prédéterminé, aucun objet n'étant alors considéré comme détecté par le capteur 45.

De préférence, chaque capteur 45 rejette les échos dont la fréquence est différente de la fréquence de l'onde que ledit capteur 45 a émise, aucun objet n'étant alors considéré comme détecté par le capteur 45.

De préférence, chaque capteur 45 rejette les échos dont l'instant de réception est trop proche ou trop éloignée de l'instant d'émission de l'onde que ledit capteur a émise, aucun objet n'étant alors considéré comme détecté par le capteur 45.

Pour chacun des dispositifs de détection CH1, CH2, CH3, si les capteurs 45 correspondants ont détecté la présence d'un objet, les distances mesurées par lesdits capteurs 45 sont comparées par les moyens de traitement de l'unité de détection 40 considérée.

Un dispositif de détection CH1, CH2, CH3 confirme la présence d'un objet lorsque les distances mesurées par au moins deux capteurs 45 de ce dispositif sont sensiblement égales.

Lorsqu'au moins deux parmi les dispositifs de détection CH1, CH2, CH3 confirment la présence d'un objet, par exemple un quai, dans la zone de détection 35 en regard d'une porte 15, le procédé comporte une étape d'émission, par l'unité de détection 40 correspondante, d'un signal de détection de quai à destination des moyens de commande 30 d'une part, et à destination des moyens de traitement de chacune des unités de détection 40 associées aux portes 15 adjacentes à cette porte 15 d'autre part.

On notera que, lorsqu'un seul dispositif de détection confirme la présence d'un objet, c'est que cet objet correspond à un objet ponctuel, et non à un quai.

Au cours d'une étape suivante 110 de décision, les moyens de commande 30 déterminent si l'unité de détection 40 correspondant à une porte 15 émet un signal de détection de quai.

Si un signal de détection de quai est émis par l'unité de détection 40, les moyens de commande 30 autorisent l'ouverture de la porte 15 correspondante, au cours d'une étape suivante 115 d'autorisation.

Si, au cours de l'étape de recherche 105, l'unité de détection 40 n'émet pas de signal de détection de quai, alors l'étape de décision 110 est suivie d'une étape 120 de traitement des unités de détection 40 adjacentes.

Au cours de l'étape de traitement 120, les moyens de traitement de l'unité de détection 40 déterminent si chacune des unités de détection 40 qui sont adjacentes à l'unité de détection 40 considérée émet un signal de détection de quai au cours d'une étape d'émission correspondante.

Si chacune des unités de détection 40 qui sont adjacentes à l'unité de détection 40 considérée émet un signal de détection de quai au cours de l'étape d'émission correspondante, les moyens de traitement de l'unité de détection 40 émettent un signal de détection de quai en direction des moyens de commande 30 qui autorisent l'ouverture de la porte 15, conformément à l'étape d'autorisation 115. En effet, dans ce cas, la porte 15 se trouve en regard d'une partie basse 50 de quai en bateau 55, comme évoqué précédemment.

Si, au cours de l'étape de recherche 105, l'unité de détection 40 de chacune des portes 15 adjacentes n'émet pas de signal de détection de quai, alors l'étape de traitement 120 est suivie d'une étape 125 de blocage de la porte 15 considérée.

Au cours de l'étape de blocage 125, les moyens de commande 30 empêchent l'ouverture de la porte 15 considérée.

En référence à la figure 5, la porte 15 se trouve en face d'un quai 20.

Ainsi, au cours de l'étape de recherche 105, les capteurs 45 de chacun des dispositifs CH1, CH2, CH3 détectent deux à deux la présence d'un objet à une distance sensiblement égale.

A l'issue de l'étape de recherche 105, l'unité de détection 40 émet un signal de détection de quai à destination des moyens de commande 30.

Ensuite, à l'issue de l'étape de décision 110, les moyens de commande 30 détectent que l'unité de détection 40 considérée émet un signal de détection de quai.

Les moyens de commande 30 autorisent alors l'ouverture de la porte 15, conformément à l'étape d'autorisation 115.

La figure 6 correspond à une situation dans laquelle la porte 15 se trouve en face de la partie basse 50 d'un quai en bateau 55.

A l'issue de l'étape de recherche 105, l'unité de détection 40 de la porte 15 n'a pas émis de signal de détection de quai, aucun objet n'étant détecté par les capteurs 45 de l'unité de détection 40.

Simultanément, l'unité de détection 40 de chacune des portes 15 adjacentes détecte la présence du quai au cours de l'étape de recherche 15 correspondante et émet un signal de détection de quai.

L'étape de décision 110, pour la porte 15 se trouvant en face de la partie basse 50 du quai en bateau 55, est suivie de l'étape de traitement 120.

Les deux portes 15 adjacentes à la porte 15 se trouvant en face de la partie basse 55 émettant un signal de détection de quai, à l'issue de l'étape de traitement 120, les moyens de commande 30 autorisent l'ouverture de la porte 15 se trouvant en face de la partie basse 55, conformément à l'étape d'autorisation 115.

La figure 7 correspond à une situation dans laquelle la porte 15 se trouve en face d'un poteau 60, tandis qu'aucun objet ne se trouve devant les portes adjacentes 15.

Au cours de l'étape de recherche 105, les capteurs 45 du dispositif CH1 détectent la présence d'un objet à une distance différente. Les capteurs 45 du dispositif CH3 détectent également la présence d'un objet à une distance différente. En conséquence, l'unité de détection 40 de la porte 15 n'émet pas de signal de détection de quai, le poteau 60 n'étant pas assimilé à un quai.

Simultanément, comme aucun objet ne se trouve dans la zone de détection 35 de chacune des portes 15 adjacentes, il s'en suit qu'aucune des unités de détection 40 desdites portes 15 adjacentes n'émet de signal de détection de quai.

L'étape de décision 110, pour la porte 15 se trouvant en face du poteau 60, est suivie de l'étape de traitement 120 des unités de détection 40 des portes 15 adjacentes.

Aucune des unités de détection 40 desdites portes 15 adjacentes n'émettant de signal de détection de quai, l'étape de traitement 120 est suivie d'une étape de blocage de la porte se trouvant en face du poteau 60.

On notera que l'invention n'est pas limitée au mode de réalisation décrit précédemment, mais pourrait présenter diverses variantes.

Par exemple, conformément à une première variante, les unités de détection 40 comportent des dispositifs de détection composés chacun d'un unique capteur 45.

Dans ce cas, chaque unité de détection 40 émet un signal de détection si au moins deux capteurs 45 détectent la présence d'un objet à une distance sensiblement égale.

## Revendications

1. Dispositif (10) de commande de l'ouverture d'au moins une porte (15) d'un véhicule ferroviaire (5), comportant des moyens (30) de commande de l'ouverture des portes (15),:
- le dispositif de commande (10) comportant au moins une unité de détection (40), chaque unité de détection (40) étant associée à une porte (15) respective, chaque unité de détection (40) comprenant au moins deux dispositifs (CH1, CH2, CH3) de détection de la présence d'un quai (20 ; 55) dans une zone (35) de détection en regard de la porte (15) correspondante ;
- chacune des unités de détection (40) étant propre à émettre un signal de détection de quai en direction des moyens de commande (30) ;
- les moyens de commande (30) étant configurés pour autoriser l'ouverture de la porte (15) en cas de réception dudit signal de détection de quai ;
**caractérisé en ce que** :
- chacune des unités de détection (40) est propre à émettre le signal de détection de quai lorsqu'au moins deux des dispositifs de détection (CH1, CH2, CH3) détectent la présence d'un quai (20 ; 55) dans la zone de détection (35) ;
- chaque dispositif de détection (CH1, CH2, CH3) comporte au moins deux capteurs (45) de présence d'un objet dans la zone de détection (35),
- en considérant l'ensemble des capteurs (45) des différents dispositifs de détection (CH1, CH2, CH3) d'une même unité de détection (40), ces capteurs (45) sont sensiblement alignés le long d'une direction (X-X) longitudinale, les capteurs (45) d'un même dispositif de détection (CH1, CH2, CH3) n'étant pas adjacents.

2. Dispositif de commande (10) selon la revendication 1, pour la commande de l'ouverture d'au moins trois portes (15) adjacentes, dans lequel :
- chaque unité de détection (40) associée à l'une des portes (15) est propre à émettre un signal de détection de quai vers chacune des unités de détection (40) associées aux portes (15) adjacentes à cette porte (15) ;
- chaque unité de détection (40) associée à l'une des portes (15) est propre à émettre un signal de détection de quai en direction des moyens de commande (30) lorsqu'elle reçoit un signal de détection de quai émis vers elle par chacune des unités de détection (40) associées aux portes (15) adjacentes à cette porte (15).

3. Dispositif de commande (10) selon la revendication 1 ou 2, dans lequel, pour chaque dispositif de détection (CH1, CH2, CH3), au moins un capteur (45) de chacun des autres dispositifs de détection (CH1, CH2, CH3) est intercalé entre les deux capteurs (45) dudit dispositif de détection (CH1, CH2, CH3).

4. Dispositif de commande (10) selon l'une quelconque des revendications 1 à 3, dans lequel l'unité de détection (40) n'émet un signal de détection de quai que lorsque, pour au moins deux dispositifs de détection (CH1, CH2, CH3) de cette unité de détection (40), au moins deux des capteurs (45) de chacun de ces dispositifs de détection (CH1, CH2, CH3) détectent la présence d'un objet à une distance sensiblement égale.

5. Dispositif de commande (10) selon la revendication 4, dans lequel l'unité de détection (40) n'émet un signal de détection de quai que lorsque lesdits au moins deux des capteurs (45) de chacun de ces dispositifs de détection (CH1, CH2, CH3) détectent la présence d'un objet à une distance appartenant à un intervalle prédéterminé.

6. Dispositif de commande (10) selon l'une quelconque des revendications précédentes, dans lequel chaque unité de détection (40) comporte au moins deux capteurs (45) de présence d'un objet dans la zone de détection (35), au moins deux capteurs (45) d'une unité de détection (40) étant propres à émettre des ondes de fréquences différentes et/ou à des instants différents.

7. Dispositif de commande (10) selon l'une quelconque des revendications précédentes, dans lequel chaque unité de détection (40) comporte au moins un capteur (45) de présence d'un objet dans la zone de détection (35), au moins l'un des capteurs (45) étant un émetteur-récepteur à ultrasons, avantageusement un transducteur à ultrasons.

8. Dispositif de commande (10) selon l'une quelconque des revendications précédentes, dans lequel chaque unité de détection (40) comporte au moins un capteur (45) de présence d'un objet dans la zone de détection (35), au moins l'un des capteurs (45) étant un émetteur-récepteur optique, avantageusement un émetteur-récepteur à laser.

9. Véhicule ferroviaire (5) **caractérisé en ce qu'**il comporte au moins un dispositif de commande (10) selon l'une quelconque des revendications 1 à 8.

10. Procédé de commande de l'ouverture d'au moins une porte (15) d'un véhicule ferroviaire (5) au moyen d'un dispositif de commande (10) selon l'une quelconque des revendications 1 à 8, **caractérisé en ce qu'**il comporte :
- pour chaque porte (15), une étape (105) de recherche de la présence d'un quai (20 ; 55) dans une zone de détection (35) en regard de cette porte (15) par chacun des dispositifs de détection (CH1, CH2, CH3) de l'unité de détection (40) associée à cette porte (15) ;
- une étape (105) d'émission d'un signal de détection de quai en direction des moyens de commande (30) par l'unité de détection (40) si au moins deux des dispositifs de détection (CH1, CH2, CH3) détectent la présence d'un quai (20 ; 55) dans la zone de détection (35) ;
- une étape (115) d'autorisation de l'ouverture de la porte (15), lorsque l'unité de détection (40) a émis un signal de détection de quai.

11. Procédé selon la revendication 10 pour l'ouverture d'au moins trois portes (15) adjacentes d'un véhicule ferroviaire (5) au moyen d'un dispositif de commande (10) selon l'une quelconque des revendications 1 à 8, **caractérisé en ce qu'**il comporte :
- une étape (105) d'émission d'un signal de détection de quai par chaque unité de détection (40) associée à l'une des portes (15) vers chacune des unités de détection (40) associées aux portes (15) adjacentes à cette porte (15) ;
- une étape (120) de traitement, au cours de laquelle chaque unité de détection (40) associée à l'une des portes (15) émet un signal de détection de quai en direction des moyens de commande (30) si cette unité de détection (40) reçoit un signal de détection de quai émis vers elle par chacune des unités de détection (40) associées aux portes (15) adjacentes à cette porte (15).

## Patentansprüche

1. Vorrichtung (10) zur Steuerung des Öffnens wenigstens einer Tür (15) eines Schienenfahrzeugs (5), aufweisend Mittel (30) zur Steuerung des Öffnens von Türen (15),
- wobei die Vorrichtung zur Steuerung (10) aufweist wenigstens eine Detektionseinheit (40), wobei jede Detektionseinheit (40) einer jeweiligen Tür (15) zugeordnet ist, wobei jede Detektionseinheit (40) aufweist wenigstens zwei Vorrichtungen (CH1, CH2, CH3) zur Detektion der Anwesenheit eines Bahnsteigs (20; 55) in einem Detektionsbereich (35) gegenüber der korrespondierenden Tür (15),
- wobei jede der Detektionseinheiten (40) imstande ist, ein Bahnsteig-Detektionssignal in Richtung zu den Mitteln zur Steuerung (30) auszusenden,
- wobei die Mittel zur Steuerung (30) konfiguriert sind zum Erlauben des Öffnens der Tür (15) im Falle des Empfangs des besagten Bahnsteig-Detektionssignals,
**dadurch gekennzeichnet, dass**
- jede der Detektionseinheiten (40) imstande ist, das Bahnsteig-Detektionssignal auszusenden, wenn wenigstens zwei der Vorrichtungen zur Detektion (CH1, CH2, CH3) die Anwesenheit eines Bahnsteigs (20; 55) in dem Detektionsbereich (35) detektieren
- jede Vorrichtung zur Detektion (CH1, CH2, CH3) aufweist wenigstens zwei Sensoren (45) für die Anwesenheit eines Objekts in dem Detektionsbereich (35),
- wobei, betrachtend die Gruppe von Detektoren (45) der unterschiedlichen Vorrichtungen zur Detektion (CH1, CH2, CH3) einer selben Detektionseinheit (40), diese Sensoren (45) im Wesentlichen entlang einer Längsrichtung (X-X) ausgerichtet sind, wobei die Sensoren (45) einer selben Vorrichtung zur Detektion (CH1, CH2, CH3) nicht benachbart sind.

2. Vorrichtung zur Steuerung (10) gemäß Anspruch 1, für die Steuerung des Öffnens wenigstens dreier benachbarter Türen (15), wobei:
- jede Detektionseinheit (40), die einer der Türen (15) zugeordnet ist, imstande ist, ein Bahnsteig-Detektionssignal zu jeder der Detektionseinheiten (40), die zu den zu dieser Tür (15) benachbarten Türen (15) zugeordnet sind, auszusenden,
- wobei jede Detektionseinheit (40), die zu einer der Türen (15) zugeordnet ist, imstande ist, ein Bahnsteig-Detektionssignal in Richtung zu den Mitteln zur Steuerung (30) auszusenden, wenn sie ein Bahnsteig-Detektionssignal empfängt, das zu ihr ausgesendet wurde von jeder der Detektionseinheiten (40), die den zu dieser Tür (15) benachbarten Türen (15) zugeordnet sind.

3. Vorrichtung zur Steuerung (10) gemäß Anspruch 1 oder 2, wobei für jede Vorrichtung zur Detektion (CH1, CH2, CH3) wenigstens ein Sensor (45) von jeder der anderen Vorrichtungen zur Detektion (CH1, CH2, CH3) zwischen den beiden Sensoren (45) der besagen Vorrichtung zur Detektion (CH1, CH2, CH3) zwischengeordnet ist.

4. Vorrichtung zur Steuerung (10) gemäß irgendeinem der Ansprüche 1 bis 3, wobei die Detektionseinheit (40) kein Bahnsteig-Detektionssignal aussendet, wenn für wenigstens zwei Vorrichtungen zur Detektion (CH1, CH2, CH3) dieser Detektionseinheit (40) wenigstens zwei der Sensoren (45) von jeder dieser Vorrichtungen zur Detektion (CH1, CH2, CH3) die Anwesenheit eines Objekts in einem im Wesentlichen gleichen Abstand detektieren.

5. Vorrichtung zur Steuerung (10) gemäß Anspruch 4, wobei die Detektionseinheit (40) kein Bahnsteig-Detektionssignal aussendet, wenn die besagten wenigstens zwei der Sensoren (45) von jeder dieser Vorrichtungen zur Detektion (CH1, CH2, CH3) die Anwesenheit eines Objekts in einem Abstand detektieren, der einem vorbestimmten Intervall zugehört.

6. Vorrichtung zur Steuerung (10) gemäß irgendeinem der vorhergehenden Ansprüche, wobei jede Detektionseinheit (40) aufweist wenigstens zwei Sensoren (45) für die Anwesenheit eines Objekts im Detektionsbereich (35), wobei wenigstens zwei Sensoren (45) einer Detektionseinheit (40) imstande sind, Wellen unterschiedlicher Frequenzen und/oder zu unterschiedlichen Zeitpunkten auszusenden.

7. Vorrichtung zur Steuerung (10) gemäß irgendeinem der vorhergehenden Ansprüche, wobei jede Detektionseinheit (40) aufweist wenigstens einen Sensor (45) für die Anwesenheit eines Objekts im Detektionsbereich (35), wobei wenigstens einer der Sensoren (45) ein Ultraschallwellen-Sender-Empfänger, vorteilhafterweise ein Ultraschallwellen-Transduktor, ist.

8. Vorrichtung zur Steuerung (10) gemäß irgendeinem der vorhergehenden Ansprüche, wobei jede Detektionseinheit (40) aufweist wenigstens einen Sensor (45) für die Anwesenheit eines Objekts in dem Detektionsbereich (35), wobei wenigstens einer der Sensoren (45) ein optischer Sender-Empfänger, vorteilhafterweise ein Laser-Sender-Empfänger, ist.

9. Schienenfahrzeug (5), **dadurch gekennzeichnet, dass** es aufweist wenigstens eine Vorrichtung zur Steuerung (10) gemäß irgendeinem der Ansprüche 1 bis 8.

10. Verfahren zur Steuerung des Öffnens wenigstens einer Tür (15) eines Schienenfahrzeugs (5) mittels einer Vorrichtung zur Steuerung (10) gemäß irgendeinem der Ansprüche 1 bis 8, **dadurch gekennzeichnet, dass** es aufweist:
- für jede Tür (15) einen Schritt (105) des Suchens nach der Anwesenheit eines Bahnsteigs (20; 55) in einem Detektionsbereich (35) gegenüber dieser Tür (15) durch jede der Vorrichtungen zur Detektion (CH1, CH2, CH3) der dieser Tür (15) zugeordneten Detektionseinheit (40),
- einen Schritt (105) des Aussendens eines Bahnsteig-Detektionssignals in Richtung zu den Mitteln zur Steuerung (30) mittels der Detektionseinheit (40), wenn wenigstens zwei der Vorrichtungen zur Detektion (CH1, CH2, CH3) die Anwesenheit eines Bahnsteigs (20; 55) in dem Detektionsbereich (35) detektieren,
- einen Schritt (115) des Erlaubens des Öffnens der Tür (15), wenn die Detektionseinheit (40) ein Bahnsteig-Detektionssignal ausgesendet hat.

11. Verfahren gemäß Anspruch 10 für das Öffnen wenigstens dreier benachbarter Türen (15) eines Schienenfahrzeugs (5) mittels einer Vorrichtung zur Steuerung (10) gemäß irgendeinem der Ansprüche 1 bis 8, **dadurch gekennzeichnet, dass** es aufweist:
- einen Schritt (105) des Aussendens eines Bahnsteig-Detektionssignals durch jede Detektionseinheit (40), die einer der Türen (15) zugeordnet ist, zu jeder der Detektionseinheiten (40), die den zu dieser Tür (15) benachbarten Türen (15) zugeordnet sind,
- einen Schritt (120) des Verarbeitens, im Laufe dessen jede Detektionseinheit (40), die einer der Türen (15) zugeordnet ist, ein Bahnsteig-Detektionssignal in Richtung zu den Mitteln zur Steuerung (30) aussendet, wenn diese Detektionseinheit (40) ein Bahnsteig-Detektionssignal empfängt, das zu ihr ausgesendet wurde durch jede der Detektionseinheiten (40), die den zu dieser Tür (15) benachbarten Türen (15) zugeordnet ist.

## Claims

1. Device (10) for controlling the opening of at least one door (15) of a railway vehicle (5), comprising means (30) for controlling the opening of the doors (15);
- the control device (10) comprising at least one detection unit (40), each detection unit (40) being associated with a respective door (15), each detection unit (40) comprising at least two devices (CH1, CH2, CH3) for detecting the presence of a platform (20; 55) in a detection zone (35) opposite the corresponding door (15);
- each of the detection units (40) being capable of emitting a platform detection signal towards the control means (30);
- the control means (30) being configured to authorise the opening of the door (15) when said platform detection signal is received,
**characterised in that**:
- each of the detection units (40) is capable of emitting the platform detection signal when at least two of the detection devices (CH1, CH2, CH3) detect the presence of a platform (20; 55) in the detection zone (35)
- each detection device (CH1, CH2, CH3) comprises at least two sensors (45) for sensing the presence of an object in the detection zone (35),
- considering the totality of the sensors (45) of the various detection devices (CH1, CH2, CH3) of one detection unit (40), those sensors (45) are substantially aligned in a longitudinal direction (X-X), the sensors (45) of one detection device (CH1, CH2, CH3) not being adjacent.

2. Control device (10) according to claim 1 for controlling the opening of at least three adjacent doors (15), wherein:
- each detection unit (40) associated with one of the doors (15) is capable of emitting a platform detection signal towards each of the detection units (40) associated with the doors (15) adjacent to that door (15);
- each detection unit (40) associated with one of the doors (15) is capable of emitting a platform detection signal towards the control means (30) when it receives a platform detection signal emitted to it by each of the detection units (40) associated with the doors (15) adjacent to that door (15).

3. Control device (10) according to claim 1 or 2, wherein, for each detection device (CH1, CH2, CH3), at least one sensor (45) of each of the other detection devices (CH1, CH2, CH3) is interposed between the two sensors (45) of said detection device (CH1, CH2, CH3).

4. Control device (10) according to any one of claims 1 to 3, wherein the detection unit (40) emits a platform detection signal only when, for at least two detection devices (CH1, CH2, CH3) of that detection unit (40), at least two of the sensors (45) of each of those detection devices (CH1, CH2, CH3) detect the presence of an object at a substantially equal distance.

5. Control device (10) according to claim 4, wherein the detection unit (40) emits a platform detection signal only when said at least two of the sensors (45) of each of those detection devices (CH1, CH2, CH3) detect the presence of an object at a distance belonging to a predetermined range.

6. Control device (10) according to any one of the preceding claims, wherein each detection unit (40) comprises at least two sensors (45) for sensing the presence of an object in the detection zone (35), at least two sensors (45) of a detection unit (40) being capable of emitting waves of different frequencies and/or at different times.

7. Control device (10) according to any one of the preceding claims, wherein each detection unit (40) comprises at least one sensor (45) for sensing the presence of an object in the detection zone (35), at least one of the sensors (45) being an ultrasonic emitter/receiver, advantageously an ultrasonic transducer.

8. Control device (10) according to any one of the preceding claims, wherein each detection unit (40) comprises at least one sensor (45) for sensing the presence of an object in the detection zone (35), at least one of the sensors (45) being an optical emitter/receiver, advantageously a laser emitter/receiver.

9. Railway vehicle (5), **characterised in that** it comprises at least one control device (10) according to any one of claims 1 to 8.

10. Method for controlling the opening of at least one door (15) of a railway vehicle (5) by means of a control device (10) according to any one of claims 1 to 8, **characterised in that** it comprises:
- for each door (15), a step (105) of searching for the presence of a platform (20; 55) in a detection zone (35) opposite that door (15) by each of the detection devices (CH1, CH2, CH3) of the detection unit (40) associated with that door (15);
- a step (105) of emitting a platform detection signal towards the control means (30) by the detection unit (40) if at least two of the detection devices (CH1, CH2, CH3) detect the presence of a platform (20; 55) in the detection zone (35);
- a step (115) of authorising the opening of the door (15) when the detection unit (40) has emitted a platform detection signal.

11. Method according to claim 10 for opening at least three adjacent doors (15) of a railway vehicle (5) by means of a control device (10) according to any one of claims 1 to 8, **characterised in that** it comprises:
- a step (105) of emitting a platform detection signal by each detection unit (40) associated with one of the doors (15) to each of the detection units (40) associated with the doors (15) adjacent to that door (15);
- a processing step (120), in which each detection unit (40) associated with one of the doors (15) emits a platform detection signal towards the control means (30) if that detection unit (40) receives a platform detection signal emitted to it by each of the detection units (40) associated with the doors (15) adjacent to that door (15).
